# EUROPÄISCHE PATENTSCHRIFT

(11) **EP 0 935 524 B1**
(45) Veröffentlichungstag und Bekanntmachung des Hinweises auf die Patenterteilung: **20.11.2002**
(21) Anmeldenummer: 98945316.2
(22) Anmeldetag: 08.09.1998
(51) Int. Cl.: B29C 49/04, B29C 49/18, B29K 23/00

(54) **VERFAHREN ZUM HERSTELLEN VON GESCHÄUMTEN KUNSTSTOFFHOHLKÖRPERN**
METHOD FOR PRODUCING FOAMED PLASTIC HOLLOW BODIES
PROCEDE DE FABRICATION DE CORPS CREUX EN MATIERE PLASTIQUE MOUSSE

(30) Priorität: 10.09.1997 DE 19739627
(43) Veröffentlichungstag der Anmeldung: 18.08.1999
(73) Patentinhaber: Wella Aktiengesellschaft, 64274 Darmstadt (DE)
(72) Erfinder: KOHN, Udo, D-64289 Darmstadt (DE); STEIGERWALD, Franz, D-64347 Griesheim (DE)
(86) Internationale Anmeldenummer: EP9805692
(87) Internationale Veröffentlichungsnummer: WO99012724

(56) Entgegenhaltungen:
- DE-A- 19 525 198
- US-A- 3 502 754
- US-A- 3 901 958
- US-A- 5 302 455
- PATENT ABSTRACTS OF JAPAN vol. 012, no. 381 (M-752), 12. Oktober 1988 & JP 63 134220 A (KAO CORP), 6. Juni 1988
- DATABASE WPI Section Ch, Week 8106 Derwent Publications Ltd., London, GB; Class A13, AN 81-08915D XP002086868 & JP 55 156033 A (SEKISUI PLASTICS CO LTD) , 4. Dezember 1980

## Beschreibung

Die Erfindung betrifft ein Verfahren nach der Gattung des Oberbegriffs des Anspruches 1.

Im Zuge des Bestrebens zur Reduzierung des Materialaufwandes bei Kunststoffhohlkörpern, insbesondere bei Verpackungen ist es bekannt, Verpackungsbehälter (Flaschen) aus geschäumtem Kunststoff herzustellen.
Solche Verpackungsbehälter werden häufig in Anwendungsbereichen eingesetzt, bei denen eine glatte Außenoberfläche ein wesentliches Funktionsmerkmal darstellt, um eine attraktive Produkt-Ästhetik zu präsentieren. Die im Extrusionsblasverfahren hergestellten Schaumhohlkörper weisen allerdings eine unruhige, durch Gasbläschen des Schaumes hervorgerufene Wölbung der Außenoberfläche auf. Die Verteilung der Gasbläschen in der Schaumhohlkörperwandung ist auch häufig nicht homogen genug, was zu ungleichmäßigen Gashohlräumen führt und wiederum Auswirkungen auf die Außenoberfläche als auch auf die mechanischen Eigenschaften der Wandung hat. Besonders negativ wirken sich diese Effekte bei Hohlkörperwandstärken im Bereich kleiner als 1,5 mm aus. Um diesen Nachteil bei extrusionsgeblasenen, geschäumten Hohlkörpern zu vermeiden, wird zum Beispiel eine kompakte, glatte Außenhaut im Koextrusionsverfahren aufextrudiert. Andere Verfahren, wie zum Beispiel nach der DE 1504359-A schlägt vor, durch schnelles Abkühlen des extrudierten Schlauches auf seiner Außenseite schon vor dem Aufblasvorgang eine kompakte Außenhaut zu erzeugen. Dabei versucht man, gleichzeitig eine unkontrollierte Schaumexpansion am Schlauch zu regulieren.

In einer weiteren Schrift PCT/EP96/05485 wird vorgeschlagen, eine glatte Außenhaut durch Ummantelung eines Behälters mit einer glatten Behälterdekorierung zu erzeugen.

Alle aufgeführten Maßnahmen und Verfahren haben den Nachteil, daß besondere Aufwendungen hinsichtlich der glatten Außenhaut durchzuführen sind, welche die Kosten derart erhöhen,daß ein wesentlicher Anteil des Kostenvorteils durch den geschäumten Hohlkörper aufgezehrt wird.

In einer weiteren Schrift DE 19525198-A wird ein gattungsgemäßes Verfahren beschrieben, welches unter Einhaltung bestimmter Parameter die Herstellung eines extrusionsgeblasenen Schaumhohlkörpers ermöglichen soll. Dazu wird einem handelsüblichen PE-Granulat ein Schäummittel beigemischt. Dies geschieht üblicherweise als Batch-Granulat auf Basis PE mit einer Korngröße von 3-5 mm oder als Pulver, welches dem PE-Granulat beigemischt wird. Weiterhin erfolgt eine Erwärmung der Kunststoffschmelze auf 20-30°C über der vom kompakten Kunststoffmaterial liegenden Schmelzentemperatur und die Anwendung eines Druckes der Blasluft von 0,5-2,5 bar. Dabei ist das Blaswerkzeug auf eine Temperatur von 7-15°C gekühlt. Bei Einstellung dieser Parameter, die lediglich den bekannten Stand der Technik darstellen, kann zwar ein geschäumter Hohlkörper erzeugt werden, er erfüllt jedoch nicht die Anforderungen hinsichtlich der gewünschten Eigenschaften, insbesondere der glatten Außenoberfläche und der Feinverteilung der Gasbläschen in der KunststoffMatrix.

Der Erfindung liegt die Aufgabe zugrunde, ein Verfahren nach der Gattung des Oberbegriffs des Anspruchs 1 bzw. 3 zu schaffen, mit dem eine glatte Außenoberfläche und eine Feinverteilung der Glasbläschen erreicht wird durch verfahrenstechnische Maßnahmen, die so gut wie keine kostenwirksamen Zusatzaufwendungen erfordern.

Diese Aufgabe wird nach dem kennzeichnenden Teil des Anspruches 1 oder 3 gelöst. Weitere vorteilhafte Weiterbildungen gehen aus den abhängigen Ansprüchen hervor.

Bei Anwendung der Verfahrensmerkmale nach den nebengeordneten Ansprüchen 1 und 3 entstehen überraschenderweise geschäumte Hohlkörper mit den oben beschriebenen Eigenschaften und einer praktisch glatten Außenoberfläche, die den ästhetischen Anforderungen an eine Verpackung genügt. Dabei sind keine Zusatzmaßnahmen oder Zusatzeinrichtungen erforderlich. Wird eines der kennzeichnenden Merkmale wesentlich verändert, so ergibt sich eine sofortige Verschlechterung der Oberfläche, indem diese zum Beispiel feine Wölbungen aufweist bzw. es wird keine zufriedenstellende Dichteerniedrigung bzw. Schaumdichte im oben beschriebenen Bereich erzielt bzw. die Schaumblasengröße- und Verteilung ist ungleichmäßig.

Besonders wichtig für eine glatte Außenoberfläche ist eine spezifische Einstellung des Blasdruckes in dem Bereich zwischen 0,5 und 2,0 bar in Abhängigkeit von der Hohlkörperformgestalt und der Wandstärke, wobei Formen mit relativ großen Vertiefungen und schärferen Ecken/Kanten eine intensivere Ausblasung des Schlauchvorformlings mit einem Blasdruck im höheren Druckbereich bis 2,0 bar erfordern (Anspruch 2).

Extrem zu formende Hohlkörper bzw. Flaschenkonturen (spitze Ecken und Kanten) lassen sich nicht mehr mit einem Blasdruck von bis zu 2 bar herstellen, sondern erst mittels eines sogenannten Intervallblasverfahrens, wobei in einem ersten Zeitabschnitt (vorzugsweise 0,5 bis 2,0 Sekunden) ein Blasdruck von 3 bis 10 bar (je nach Wandstärke) und in einem zweiten Zeitabschnitt (vorzugsweise 3 bis 5 Sekunden) ein Blasdruck von 0,5 bis 1,0 vorgesehen ist (Anspruch 3 und 4).

So hat es sich für eine glatte Außenoberfläche als besonders vorteilhaft erwiesen, eine Werkzeugoberflächentemperatur von 35 - 40°C, vorzugsweise von 35°C vorzusehen, wodurch der Gasdruckverlauf bei der Gasblasenbildung aus dem Treibmittel günstig beeinflußt wird (Anspruch 5).

In einer Weiterbildung bezieht sich die Temperierung der Blaswerkzeug-Oberfläche nur auf den Teil des Hohlkörpers (Flasche), der im Sichtbereich des Verwenders steht (Mantelbereich und Schulterbereich) während der Bodenbereich - bei dem die höhere Wärmemenge abzuführen und somit zykluszeitbestimmmend ist - eine übliche Werkzeugtemperatur für die herkömmliche Kühlung von 7-15°C aufweist. Dazu wird das Werkzeug in mindestens eine Kühlund eine Temperierzone unterteilt. Dadurch, daß das Blaswerkzeug in mindestens eine Kühl- und eine Temperierzone unterteilt ist, ist durch die Kühlzone ein schnelles Abkühlen des Behälterteils in diesem Bereich möglich, wobei diese Zone für den Bodenbereich und auch wahlweise für den Halsbereich bei Flaschen vorgesehen ist, wodurch dann zwar keine so optimale glatte Außenoberfläche erzielt wird - was in diesen Bereichen auch unerheblich ist - , aber dadurch die bei einem üblichen Extrusionsblasverfahren üblichen Zykluszeiten erreicht werden (Ansprüche 6 bis 8).

Als vorteilhaft für eine Schaumbildung mit einer glatten Oberfläche hat sich als Treibmittel ein Mehrkomponentengemisch von Zitronensäure und Salzen der Zitronen- und der Kohlensäure erwiesen. Dieses Treibmittel reagiert bei der Zersetzung endotherm. Außerdem entsteht bei der Zersetzungsreaktion Kohlendioxyd, welches eine Nukleierungswirkung aufweist. Beide Merkmale fördern die Bildung feiner, kleiner Gasbläschen (Anspruch 9).

Es wird eine sehr gleichmäßige Vermischung des PE-HD-Granulats mit einer Korngröße von 3 bis 5 mm mit einem Treibmittel-Masterbatch auf Basis HDPE mit einer mittleren Korngröße von ungefähr 1 mm erreicht, was die Bildung einer glatten Außenoberfläche und einer Gasblasenfeinverteilung mit entscheidend beeinflußt (Anspruch 10).

Ein optimales Mischungsverhältnis ist gegeben, wenn das Granulat mit 0,5 bis 2,5 % des Treibmittel-Masterbatch versehen wird (Anspruch 11).

Diese Vermischung wird weiter dadurch unterstützt, daß im Einzug des Extruders der Kunststoff mit einer Temperatur unterhalb der Zersetzungstemperatur des Treibmittels beginnend erhitzt wird mit einem progressiven Temperaturverlauf bis zum Düsenaustritt (Anspruch 12).

Auch wird die Vermischung durch eine Extruderdrehzahl von 20 bis 25 Upm weiter optimiert (Anspruch 13).

Besonders vorteilhaft ist eine Herstellung von flaschenartigen Kunststoffkörpern (Flaschen und Tuben) mit diesem Verfahren, da für diese ein großer Bedarf im Markt besteht (Anspruch 14).

Zum Dosieren aus einem flaschenartigen Kunststoffbehälter ist es vorteilhaft, diesen formelastisch knautschbar auszubilden, was dadurch erreicht wird, daß der geschäumte Kunststoff eine von 10 bis 30 % geringere Dichte (Schaumanteil) als die Dichte des gleichen ungeschäumten Kunststoffes aufweist (Anspruch 15).

Eine Zugabe von 5 bis 20 % LDPE - vorzugsweise ungefähr 5 % - zum Basismaterial HDPE bewirkt eine intensivere Ausbildung und gleichmäßigere Verteilung der Gasbläschen (Ansprüche 16 und 17).

Zwecks dosierter Abgabe durch Knautschen auf eine Wandung einer (kopfstehenden) Flasche, zum Beispiel einer Shampoo-Flasche als Kunststoffhohlkörper, ist ein maximales Volumen von 2,0 1 und eine Wandstärke von 0,6 bis 1,2 mm vorgesehen (Anspruch 18).

### Nachfolgend ein erstes Ausführungsbeispiel:

Es wird ein Hohlkörper mit einem Volumen von 250 ml im Extrusions-Blasverfahren hergestellt. Dazu wird ein PE-HD-Granulat mit einer Korngröße von 3-5 mm mit 1,5% des beschriebenen Treibmittel-Masterbatch vermischt und auf einer Extrusionsblasmaschine mit einem entsprechenden Extruder aufgeschmolzen und als Schlauch extrudiert. Hierzu wird ein Temperatur-Programm gewählt, welches im Einzug 170°C beginnend, mit einer Steigerung auf 210°C am Düsenaustritt endet. Es ist eine Massetemperatur von 205-215°C erforderlich. Die Extruder-Drehzahlen sind entsprechend der Extruder-Durchmesser und Extruder-Länge zu ermitteln. Vorteilhaft sind Drehzahlen von 20-25 Upm. Der Schlauchvorformling wird von der Werkzeugform aufgegriffen und mit einem Blasdruck von 0,5-2,0 bar an die Werkzeughöhlung gepreßt. Die Werkzeugkühlung erfolgt mit Wasser, das auf 35°C temperiert ist. Der Hohlkörper- bzw. Flaschenherstellvorgang läuft mit einer Zykluszeit von ca. 10s ab, wonach die beschriebene, geschäumte Flasche aus dem Werkzeug entnommen wird. Die Flasche hat ein Einsatzgewicht von 15g und eine mittlere Materialdichte von 0,78g/cm³. Die Außenoberfläche ist praktisch glatt und wird vom Verbraucher als kosmetisch bewertet. Die Zykluszeit des Herstellvorganges unterscheidet sich besonders auch bei Einsatz der werkzeuggeteilten Temperierung/Kühlung praktisch nicht von derjenigen einer Herstellung kompakter Hohlkörper (Flaschen).

### Zweites Ausführungsbeispiel:

Es wird ein extrem zu formender Hohlkörper (zum Beispiel rechteckige Flasche mit spitzen Ecken und Kanten) mit einem Volumen von 250 ml im Extrusions-Intervallblasverfahren hergestellt. Dazu wird ein PE-HD-Granulat mit einer Korngröße von 3-5 mm mit 1,5% des beschriebenen Treibmittel-Masterbatch vermischt und auf einer Extrusionsblasmaschine mit einem entsprechenden Extruder aufgeschmolzen und als Schlauch extrudiert. Hierzu wird ein Temperatur-Programm gewählt, welches im Einzug 170°C beginnend, mit einer Steigerung auf 210°C am Düsenaustritt endet. Es ist eine Massetemperatur von 205-215°C erforderlich. Die Extruder-Drehzahlen sind entsprechend der Extruder-Durchmesser und Extruder-Länge zu ermitteln. Vorteilhaft sind Drehzahlen von 20-25 Upm. Der Schlauchvorformling wird von der Werkzeugform aufgegriffen und in einem sogenannten Intervallblasverfahren aufgeblasen, wobei in einem ersten Zeitabschnitt ein Blasdruck von 3 bis 10 bar - vorzugsweise 8 bis 10 bar - und in einem zweiten Zeitabschnitt ein Blasdruck von 0,5 bis 1,0 bar vorgesehen ist. Als erster Zeitabschnitt ist eine Zeit von 0,5 bis 2,0 Sekunden und als zweiter Zeitabschnitt eine Zeit von 3 bis 5 Sekunden vorgesehen. Die Werkzeugkühlung erfolgt mit Wasser, das auf 35°C temperiert ist. Der Hohlkörper- bzw.
Flaschenherstellvorgang läuft mit einer Zykluszeit von ca. 7s ab, wonach die beschriebene, geschäumte Flasche aus dem Werkzeug entnommen wird. Die Flasche hat ein Einsatzgewicht von 15g und eine mittlere Materialdichte von 0,78g/cm³. Die Außenoberfläche ist praktisch glatt und wird vom Verbraucher als kosmetisch bewertet. Die Zykluszeit des Herstellvorganges unterscheidet sich besonders auch bei Einsatz der werkzeuggeteilten Temperierung/Kühlung praktisch nicht von derjenigen einer Herstellung kompakter Hohlkörper (Flaschen).

## Patentansprüche

1. Verfahren zum Herstellen von geschäumten Kunststoffhohlkörpern aus Polyethylen oder Polypropylen in einem Extrusionsblasverfahren mit einem Einschneckenextruder und mit einem Blaswerkzeug, wobei der Kunststoff mittels eines chemischen Treibmittels geschäumt ist, und ein aus diesem geschäumten Kunststoff gebildeter Schlauchvorformling in dem Blaswerkzeug aufgeblasen wird, **dadurch gekennzeichnet,**
- **daß** das Blaswerkzeug eine Werkzeugoberflächentemperatur von mindestens 35°C aufweist,
- **daß** ein sich endotherm zersetzendes Treibmittel mit Nukleierungswirkung in Form eines Masterbatch auf Basis HDPE eingesetzt wird,
- **daß** das Batch eine mittlere Korngröße von ungefähr 1 mm aufweist, und
- **daß** der Schlauchvorformling mit einem Druck zwischen 0,5 und 2,0 bar aufgeblasen wird.

2. Verfahren nach Anspruch 1, **dadurch gekennzeichnet, daß** der Schlauchvorformling mit einem Druck von ungefähr 1,5 bis 2,0 bar aufgeblasen wird.

3. Verfahren zum Herstellen von geschäumten Kunststoffhohlkörpern aus Polyethylen oder Polypropylen in einem Extrusionsblasverfahren mit einem Einschneckenextruder und mit einem Blaswerkzeug, wobei der Kunststoff mittels eines chemischen Treibmittels geschäumt ist, und ein aus diesem geschäumten Kunststoff gebildeter Schlauchvorformling in dem Blaswerkzeug aufgeblasen wird, **dadurch gekennzeichnet,**
- **daß** das Blaswerkzeug eine Werkzeugoberflächentemperatur von mindestens 35°C aufweist,
- **daß** ein sich endotherm zersetzendes Treibmittel mit Nukleierungswirkung in Form eines Masterbatch auf Basis HDPE eingesetzt wird,
- **daß** das Batch eine mittlere Korngröße von ungefähr 1 mm aufweist, und
- **daß** der Schlauchvorformling in einem sogenannten Intervallblasverfahren aufgeblasen wird, wobei in einem ersten Zeitabschnitt ein Blasdruck von 3 bis 10 bar - vorzugsweise 8 bis 10 - und in einem zweiten Zeitabschnitt ein Blasdruck von 0,5 bis 1,0 bar vorgesehen ist.

4. Verfahren nach Anspruch 3, **dadurch gekennzeichnet, daß** als erster Zeitabschnitt eine Zeit von 0,5 bis 2,0 Sekunden und als zweiter Zeitabschnitt eine Zeit von 3 bis 5 Sekunden vorgesehen sind.

5. Verfahren nach Anspruch 1 oder 3, **dadurch gekennzeichnet, daß** eine Werkzeugoberflächentemperatur von 35° bis 40°C - vorzugsweise 35 °C - vorgesehen ist.

6. Verfahren nach Anspruch 1 oder 3, **dadurch gekennzeichnet, daß** das Blaswerkzeug in mindestens eine Kühl- und eine Temperierzone unterteilt ist.

7. Verfahren nach Anspruch 6, **dadurch gekennzeichnet, daß** das Blaswerkzeug nur im Mantelbereich, wahlweise auch im Schulterbereich bei Flaschen, eine Werkzeugoberflächentemperatur von mindestens 35°C aufweist.

8. Verfahren nach Anspruch 6, **dadurch gekennzeichnet, daß** das Blaswerkzeug in der entsprechenden Zone des Behälterbodens auf eine Temperatur von 7 bis 15°C gekühlt wird.

9. Verfahren nach mindestens Anspruch 6, **dadurch gekennzeichnet , daß** das Treibmittel ein Mehrkomponentengemisch von Zitronensäure und Salzen der Zitronen- und der Kohlensäure aufweist.

10. Verfahren nach mindestens Anspruch 1 oder 3,
**dadurch gekennzeichnet, daß** ein Kunststoffgranulat mit einer Korngröße von 3 bis 5 mm verwendet wird.

11. Verfahren nach mindestens Anspruch 10, **dadurch gekennzeichnet , daß** das Granulat mit 0,5 bis 2,5 % des Treibmittel-Masterbatch vermischt wird.

12. Verfahren nach mindestens Anspruch 1 oder 3,
**dadurch gekennzeichnet, daß** im Einzug des Extruders der Kunststoff mit einer Temperatur unterhalb der Zersetzungstemperatur des Treibmittels beginnend erhitzt wird mit einen progressiven Temperaturverlauf bis zum Düsenaustritt.

13. Verfahren nach mindestens Anspruch 1 oder 3,
**dadurch gekennzeichnet, daß** der Extruder mit einer Drehzahl von 20 bis 25 Upm betrieben wird.

14. Verfahren nach mindestens Anspruch 1 oder 3,
**dadurch gekennzeichnet, daß** ein flaschenartiger Kunststoffhohlkörper vorgesehen ist.

15. Verfahren nach mindestens Anspruch 14, **dadurch gekennzeichnet, daß** der geschäumte Kunststoff eine von 10 bis 30% geringere Dichte als die Dichte des gleichen ungeschäumten Kunststoffes aufweist.

16. Verfahren nach mindestens Anspruch 1 oder 3,
**dadurch gekennzeichnet, daß** dem Basismaterial HDPE 5 bis 20 % LDPE zugesetzt wird.

17. Verfahren nach Anspruch 16, **dadurch gekennzeichnet, daß** dem Basismaterial HDPE 5 % LDPE zugesetzt wird.

18. Verfahren nach mindestens Anspruch 14, **dadurch gekennzeichnet, daß** ein Volumen von maximal 2,0 1 und eine Wandstärke von 0,6 bis 1,2 mm vorgesehen ist.

## Claims

1. Process for producing foamed plastic blow mouldings from polyethylene or polypropylene by an extrusion blow moulding process using a single-screw extruder and using a blowing mould, where the plastic has been foamed by means of a chemical blowing agent, and a parison formed from this foamed plastic is blown in the blowing mould, **characterized**
- **in that** the blowing mould has a mould surface temperature of at least 35°C,
- **in that** use is made of an endothermically decomposing blowing agent with nucleating action in the form of a masterbatch based on HDPE,
- **in that** the master batch has an average grain size of about 1 mm and
- **in that** the parison is blown using a pressure of from 0.5 to 2.0 bar.

2. Process according to Claim 1, **characterized in that** the parison is blown using a pressure of from about 1.5 to 2.0 bar.

3. Process for producing foamed plastic blow mouldings from polyethylene or polypropylene by extrusion blow moulding using a single-screw extruder and using a blowing mould, where the plastic has been foamed by means of a chemical blowing agent, and a parison formed from this foamed plastic is blown in the blowing mould, **characterized**
- **in that** the blowing mould has a mould surface temperature of at least 35°C,
- **in that** use is made of an endothermically decomposing blowing agent with nucleating action in the form of a masterbatch based on HDPE,
- **in that** the masterbatch has an average grain size of about 1 mm and
- **in that** the parison is blown by what is known as an interval blowing process, where a blowing pressure of from 3 to 10 bar, preferably from 8 to 10, is provided for a first period and a blowing pressure of from 0.5 to 1.0 bar is provided for a second period.

4. Process according to Claim 3, **characterized in that** the time provided for the first period is from 0.5 to 2.0 seconds and the time provided for the second period is from 3 to 5 seconds.

5. Process according to Claim 1 or 3, **characterized in that** a mould surface temperature of from 35 to 40°C, preferably 35°C, has been provided.

6. Process according to Claim 1 or 3, **characterized in that** the blowing mould has been subdivided into at least one cooling zone and one temperature-controlled zone.

7. Process according to Claim 6, **characterized in that** it is only in the jacket region, and optionally also in the shoulder region in the case of bottles, that the blowing mould has a mould surface temperature of at least 35°C.

8. Process according to Claim 6, **characterized in that** the blowing mould is cooled to a temperature of from 7 to 15°C in the appropriate zone for the container base.

9. Process according to at least Claim 6, **characterized in that** the blowing agent comprises a multicomponent mixture of citric acid and salts of citric and of carbonic acid.

10. Process according to at least Claim 1 or 3, **characterized in that** use is made of plastic pellets with a grain size of from 3 to 5 mm.

11. Process according to at least Claim 10, **characterized in that** the pellets are mixed with from 0.5 to 2.5% of the blowing agent masterbatch.

12. Process according to at least Claim 1 or 3, **characterized in that** in the feed section of the extruder the plastic is initially heated at a temperature below the decomposition point of the blowing agent, with a progressive temperature profile extending to the die outlet.

13. Process according to at least Claim 1 or 3, **characterized in that** the extruder is operated with a rotational rate of from 22 to 25 rpm.

14. Process according to at least Claim 1 or 3, **characterized in that** the plastic blow moulding provided is of bottle type.

15. Process according to at least Claim 14, **characterized in that** the density of the foamed plastic is from 10 to 30% lower than the density of the same plastic unfoamed.

16. Process according to at least Claim 1 or 3, **characterized in that** from 5 to 20% LDPE is added to the HDPE base material.

17. Process according to Claim 16, **characterized in that** 5% of LDPE is added to the HDPE base material.

18. Process according to at least Claim 14, **characterized in that** the volume provided is not more than 2.0 1 and the wall thickness provided is from 0.6 to 1.2 mm.

## Revendications

1. Procédé pour la fabrication de corps creux moussés en matériau synthétique en polyéthylène ou en polypropylène dans un procédé d'extrusion par soufflage avec une extrudeuse à vis sans fin et un outil de soufflage, le matériau synthétique étant moussé au moyen d'un agent moussant chimique et une pièce prémoulée en forme de flexible formée à partir de ce matériau synthétique moussé étant soufflée dans l'outil de soufflage, **caractérisé**
- **en ce que** l'outil de soufflage présente une température de surface d'outil d'au moins 35°C,
- **en ce qu'**on utilise un agent moussant se décomposant de manière endothermique avec un effet de nucléation sous forme d'un lot maître à base de HDPE,
- **en ce que** le lot présente une grosseur moyenne des particules d'environ 1 mm et
- **en ce que** la pièce prémoulée en forme de flexible est soufflée avec une pression entre 0,5 et 2,0 bars.

2. Procédé selon la revendication 1, **caractérisé en ce que** la pièce prémoulée en forme de flexible est soufflée avec une pression d'environ 1,5 à 2,0 bars.

3. Procédé pour la fabrication de corps creux moussés en matériau synthétique en polyéthylène ou en polypropylène dans un procédé d'extrusion par soufflage avec une extrudeuse à vis sans fin et un outil de soufflage, le matériau synthétique étant moussé au moyen d'un agent moussant chimique et une pièce prémoulée en forme de flexible formée à partir de ce matériau synthétique moussé étant soufflée dans l'outil de soufflage, **caractérisé**
- **en ce que** l'outil de soufflage présente une température de surface d'outil d'au moins 35°C,
- **en ce qu'**on utilise un agent moussant se décomposant de manière endothermique avec un effet de nucléation sous forme d'un lot maître à base de HDPE,
- **en ce que** le lot présente une grosseur moyenne des particules d'environ 1 mm et
- **en ce que** la pièce prémoulée en forme de flexible est soufflée dans ce qu'on appelle un procédé de soufflage par intervalles, dans lequel on a prévu dans un premier intervalle de temps une pression de soufflage de 3 à 10 bars - de préférence de 8 à 10 bars - et dans un deuxième intervalle de temps une pression de soufflage de 0,5 à 1,0 bar.

4. Procédé selon la revendication 3, **caractérisé en ce qu'**on a prévu comme premier intervalle de temps un temps de 0,5 à 2,0 secondes et comme deuxième intervalle de temps un temps de 3 à 5 secondes.

5. Procédé selon la revendication 1 ou 3, **caractérisé en ce qu'**on a prévu une température de surface d'outil de 35°C à 40°C - de préférence de 35°C.

6. Procédé selon la revendication 1 ou 3, **caractérisé en ce que** l'outil de soufflage est au moins divisé en une zone de refroidissement et une zone de traitement thermique.

7. Procédé selon la revendication 6, **caractérisé en ce que** l'outil de soufflage ne présente une température de surface d'outil d'au moins 35°C que dans la zone de l'enveloppe, au choix également dans la zone de l'épaulement dans le cas de bouteilles.

8. Procédé selon la revendication 6, **caractérisé en ce que** l'outil de soufflage est refroidi dans la zone correspondant au fond du récipient à une température entre 7 et 15°C.

9. Procédé selon au moins la revendication 6, **caractérisé en ce que** l'agent moussant présente un mélange à plusieurs composants d'acide citrique et de sels de l'acide citrique et carbonique.

10. Procédé selon au moins la revendication 1 ou 3, **caractérisé en ce qu'**on utilise un granulat de matériau synthétique présentant une grosseur de particules de 3 à 5 mm.

11. Procédé selon au moins la revendication 10, **caractérisé en ce que** le granulat est mélangé avec 0,5 à 2,5% du lot maître d'agent moussant.

12. Procédé selon au moins la revendication 1 ou 3, **caractérisé en ce que** lors de l'entrée dans l'extrudeuse, le matériau synthétique est chauffé en commençant à une température inférieure à la température de décomposition de l'agent moussant et à une allure de température progressive jusqu'à la sortie de la filière.

13. Procédé selon au moins la revendication 1 ou 3, **caractérisé en ce que** l'extrudeuse fonctionne à une vitesse de rotation de 20 à 25 t/min.

14. Procédé selon au moins la revendication 1 ou 3, **caractérisé en ce qu'**on a prévu un corps creux en matériau synthétique de type bouteille.

15. Procédé selon au moins la revendication 14, **caractérisé en ce que** le matériau synthétique moussé présente une densité inférieure de 10 à 30% à la densité du matériau synthétique identique non moussé.

16. Procédé selon au moins la revendication 1 ou 3, **caractérisé en ce que** le matériau de base HDPE est additionné de 5 à 20% de LDPE.

17. Procédé selon la revendication 16, **caractérisé en ce que** le matériau de base HDPE est additionné de 5% de LDPE.

18. Procédé selon au moins la revendication 14, **caractérisé en ce qu'**on a prévu un volume d'au maximum 2,0 litres et une épaisseur de paroi de 0,6 à 1,2 mm.
